(19) Europäisches Patentamt / European Patent Office / Office européen des brevets

(11) **EP 1 876 698 B1**

(12) **FASCICULE DE BREVET EUROPEEN**

(45) Date de publication et mention
de la délivrance du brevet:
**03.08.2011 Bulletin 2011/31**

(51) Int Cl.:
**H02P 1/02** *(2006.01)* *H02P 21/14* *(2006.01)*

(21) Numéro de dépôt: **07111287.4**

(22) Date de dépôt: **28.06.2007**

(54) **Procédé et dispositif d'estimation de la vitesse d'un moteur électrique**

Verfahren und Vorrichtung zum Schätzen der Geschwindigkeit eines elektrischen Motors

Method and device for estimating the speed of an electric motor

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.07.2006 FR 0606224**

(43) Date de publication de la demande:
**09.01.2008 Bulletin 2008/02**

(73) Titulaire: **Schneider Toshiba Inverter Europe SAS
27120 Pacy sur Eure (FR)**

(72) Inventeur: **Nguyen Phuoc, Vinh Tung
92100 Boulogne Billancourt (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**EP-A1- 1 221 765    WO-A-94/03965
US-A1- 2006 097 688**

**EP 1 876 698 B1**

**Description**

La présente invention se rapporte à un procédé d'estimation de la vitesse de rotation d'un moteur électrique, de type asynchrone ou synchrone. Ce procédé est mis en oeuvre à l'intérieur d'un variateur de vitesse et est destiné en particulier à être utilisé dans le cadre d'une reprise à la volée de la commande du moteur après une période de roue libre. L'invention concerne aussi un dispositif d'estimation de la vitesse de rotation d'un moteur mettant en oeuvre un tel procédé, ainsi qu'un variateur de vitesse comprenant un tel dispositif d'estimation de la vitesse.

Pour fonctionner à vitesse variable, un moteur électrique est habituellement piloté par un variateur de vitesse de type convertisseur de fréquence. Un tel variateur comporte un module redresseur qui fournit une tension de bus continue à partir d'un réseau alternatif externe, et un module onduleur comportant des composants semi-conducteurs de puissance de façon à délivrer au moteur une tension variable en Modulation de Largeur d'Impulsions (PWM - Pulse Width Modulation) aux différentes phases du moteur, à partir de la tension de bus continue.

Lorsqu'un variateur de vitesse veut reprendre le contrôle et la commande du moteur après une période plus ou moins longue de roue libre durant laquelle le moteur continue à tourner en raison de son inertie, il faut pouvoir connaître au préalable sa vitesse de rotation réelle. Cette opération peut intervenir par exemple à la suite d'une coupure d'alimentation inopinée, d'un arrêt volontaire du variateur ou d'un défaut du variateur. Si la vitesse est mal estimée, il peut alors se produire lors de la reprise à la volée des appels de courant importants entraînant un risque de freinage du moteur avant de redémarrer ainsi que des à-coups de vitesse indésirables au moment de la reprise. Quand le variateur de vitesse ne comporte pas de capteur de vitesse, il faut donc mettre en oeuvre un procédé d'estimation de la vitesse de rotation du moteur en roue libre.

Il existe déjà différentes solutions pour réaliser cette estimation de vitesse. Une solution matérielle consiste à utiliser un circuit de mesure de tensions qui permet de mesurer deux tensions entre-phases (par exemple U-W et V-W). En raison de la force électromotrice résiduelle due à la rotation du moteur, ces tensions sont des sinusoïdes décalées de +/-60° dont la fréquence correspond à la vitesse électrique du moteur. Un circuit de traitement adéquat permet alors d'en extraire la vitesse et le sens de rotation du moteur. L'inconvénient de cette solution est l'utilisation d'un circuit de mesure de tension qui doit assurer une grande dynamique, depuis la tension maximale en sortie du variateur jusqu'à la plus petite tension possible pour les faibles vitesses. Ce circuit de tension induit un coût supplémentaire pénalisant. De plus, ce circuit doit être immunisé aux perturbations apportées par les grandes longueurs et le blindage des câbles.

Il existe aussi une solution logicielle qui consiste à appliquer une tension faible sur le moteur et à effectuer un balayage de fréquence depuis la fréquence maximale positive jusqu'à la fréquence maximale négative. Quand la fréquence balayée est égale à la fréquence de la force électromotrice résiduelle du moteur, on note un passage à zéro du courant de couple $I_q$, ce qui permet d'obtenir la vitesse du moteur. Cette méthode ne demande pas de circuit de mesure de tension, mais elle présente néanmoins l'inconvénient de faire passer du courant non nul dans le moteur pendant cette phase de recherche, ce qui risque de le freiner légèrement. De plus, si la vitesse du moteur est faible ou dans le sens négatif, il faut attendre tout le temps de balayage de la fréquence qui peut durer plusieurs secondes avant d'obtenir l'estimation de la vitesse, ce qui rend la méthode trop lente et donc difficile à utiliser.

Par ailleurs, le document JP2004040837, appliqué à un moteur synchrone à aimants permanents (PMSM - Permanent Magnet Synchronous Motor), décrit une solution qui utilise une équation simplifiée Wm = Vqref / Ke, dans laquelle Wm est la vitesse recherchée du moteur, Vqref est la composante de tension de couple dans un repère d,q tournant à la vitesse de synchronisme du moteur et Ke est un paramètre moteur représentant la constante de f.e.m. (force électromotrice) du moteur. Cette solution présente l'inconvénient de nécessiter la connaissance de cette constante de f.e.m. spécifique à chaque type de moteur. Or, il serait souhaitable de s'affranchir de la connaissance d'un tel paramètre moteur, de façon notamment à simplifier la mise en oeuvre par l'utilisateur du variateur. De plus, cette équation simplifiée n'est valable que si le repère d,q tourne exactement à la bonne vitesse de synchronisme du moteur.

Le document EP 1221765 décrit un circuit pour calculer une vitesse estimée de rotation du moteur à partir d'un angle estimé de rotation qui est calculé par une fonction Arctg (tan$^{-1}$) appliquée sur le rapport des tensions $V_{qref}/V_{drel}$.

L'invention a donc pour but de proposer une méthode logicielle d'estimation de la vitesse du moteur qui soit simple, rapide à mettre en oeuvre, qui ne nécessite pas de capteur de vitesse et qui ne présente pas les inconvénients précités. Cette méthode sera utilisée en particulier lors d'une reprise à la volée de la commande du moteur.

Pour cela, l'invention décrit un procédé d'estimation de la vitesse de rotation ω d'un moteur électrique en roue libre, le procédé étant exécuté dans un variateur de vitesse destiné à commander le moteur en générant des tensions alternatives de référence Va,Vb. Le procédé comporte une étape de mesure des courants mesurés de flux Id et de couple Iq du moteur dans un repère diphasé orthogonal d,q, une étape de détermination desdites tensions alternatives de référence Va,Vb, en exécutant une régulation de courant à partir desdits courants mesurés, et à partir de courants de référence Idref et Iqref nuls dans ledit repère d,q, et une étape de calcul dans laquelle la vitesse de rotation ω est calculée en évaluant l'angle de rotation du vecteur tension dont les composantes sont lesdites tensions alternatives de référence Va,Vb dans un repère diphasé orthogonal fixe a,b. L'étape de calcul utilise un circuit de boucle à verrouillage de phase PLL qui reçoit en entrée les tensions alternatives de référence Va,Vb et qui délivre en sortie la vitesse de

2

rotation ω.

Ainsi, l'étape de calcul du procédé utilise seulement l'information de fréquence et de déphasage relatif des tensions alternatives Va,Vb pour calculer la vitesse de rotation estimée, sans nécessiter la connaissance de paramètres du moteur.

L'invention décrit aussi un dispositif un procédé d'estimation de la vitesse de rotation ω pour mettre en oeuvre un tel procédé. Le dispositif comporte des moyens de mesure délivrant un courant mesuré de flux Id et un courant mesuré de couple Iq du moteur dans un repère diphasé orthogonal d,q, des moyens de détermination qui délivrent en sortie lesdites tensions alternatives de référence Va,Vb, à partir des courants mesurés de flux Id et de couple Iq, et à partir d'un courant de référence Idref nul et d'un courant de référence Iqref nul dans ledit repère d,q, les moyens de détermination comprenant un module régulateur de courant, et des moyens de calcul qui calculent la vitesse de rotation ω en évaluant l'angle de rotation du vecteur tension dont les composantes sont lesdites tensions alternatives de référence Va,Vb dans un repère diphasé orthogonal fixe a,b. Les moyens de calcul comprennent un module circuit de boucle à verrouillage de phase PLL.

Avantageusement, le procédé et le dispositif décrits s'appliquent aux moteurs asynchrones ainsi qu'aux moteurs synchrones à aimants permanents.

Selon une caractéristique, les moyens de mesure fournissent les courants mesurés de flux Id et de couple Iq dans le repère d,q tournant à une vitesse estimée de synchronisme du moteur synchrone. Le module régulateur de courant délivre en sortie des signaux continus Vdref,Vqref par rapport audit repère d,q tournant et les moyens de détermination comprennent un module transformateur recevant lesdits signaux continus pour fournir lesdites tensions alternatives de référence Va,Vb.

Selon une autre caractéristique adaptée à un moteur asynchrone, les moyens de mesure fournissent les courants mesurés de flux Id et de couple Iq dans le repère d,q fixe.

L'invention concerne aussi un variateur de vitesse destiné à la commande d'un moteur électrique et comportant un tel dispositif d'estimation de la vitesse de rotation du moteur.

D'autres caractéristiques et avantages vont apparaître dans la description détaillée qui suit en se référant à un mode de réalisation donné à titre d'exemple et représenté par les dessins annexés sur lesquels :

- la figure 1 représente un schéma simplifié d'un premier mode de réalisation de l'invention adapté à un moteur synchrone M,
- la figure 2 représente un schéma simplifié du premier mode de réalisation de l'invention, adapté à un moteur asynchrone M',
- la figure 3 détaille les moyens de calcul du dispositif décrit dans l'invention.
- la figure 4 schématise le vecteur tension $V_{123}$ dans un repère fixe a,b.

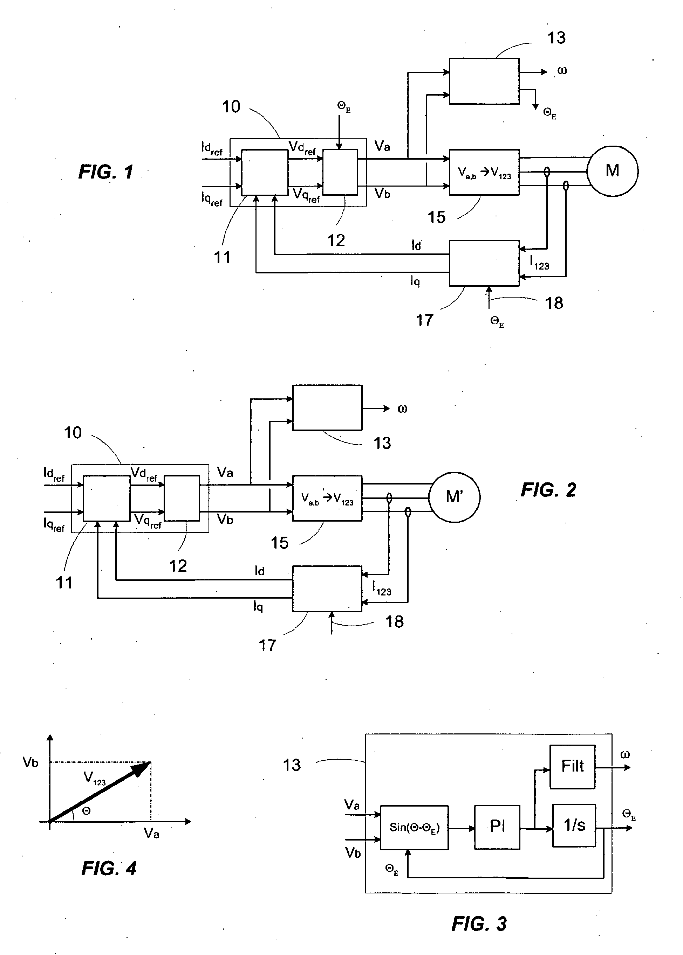

En référence aux figures 1 & 2, un variateur de vitesse, de type convertisseur de fréquence, comprend une unité de contrôle (non représentée sur les figures) chargée de piloter et de surveiller la commande d'un moteur électrique M, M'. Cette unité de contrôle intègre un dispositif destiné à estimer la vitesse de rotation ω du moteur lorsque celui-ci est en roue libre. Dans l'exemple présenté, ce moteur M, M' est un moteur triphasé commandé de façon connue par une tension variable $V_{123}$ appliquée en Modulation de Largeur d'Impulsions (PWM) sur les trois phases du moteur, au moyen de composants semi-conducteurs de puissance (non représenté sur les figures) du variateur de vitesse pilotés par l'unité de contrôle.

Dans le cadre de la figure 1, le moteur M est préférentiellement un moteur synchrone à aimants permanents et dans le cadre de la figure 2, le moteur M' est préférentiellement un moteur asynchrone.

Il se peut que, suite par exemple à une coupure d'alimentation du variateur de vitesse, à un arrêt volontaire de la commande du variateur ou à un défaut quelconque du variateur, l'unité de contrôle du variateur ne commande plus le moteur. Le moteur continue alors de tourner en roue libre en raison de son inertie pendant une durée plus ou moins longue. Si le variateur veut reprendre le contrôle et la commande du moteur pendant cette durée de roue libre, l'unité de contrôle doit alors au préalable estimer la vitesse de rotation réelle du moteur grâce à un dispositif d'estimation de la vitesse moteur.

Le dispositif d'estimation de la vitesse décrit dans l'invention comporte des moyens de mesure 17 d'un courant de flux Id et d'un courant de couple Iq du moteur. De façon classique, ces courants Id et Iq sont calculés dans un repère diphasé orthogonal d,q à partir de la mesure des courants $I_{123}$ circulant dans au moins deux des trois phases du moteur.

Dans le cas du moteur synchrone M, le repère d,q tourne à la vitesse de synchronisme du moteur M. Les moyens de mesure 17 doivent donc recevoir aussi un signal 18 qui représente la valeur de l'angle estimé $\theta_E$ de rotation du moteur. Les courants Id et Iq sont alors des signaux sensiblement continus car la vitesse estimée converge très vite (de l'ordre de quelques msec) vers la vitesse réelle de synchronisme.

Dans le cas du moteur asynchrone M', le repère d,q ne tourne pas et est maintenu fixe. Le signal 18 est donc forcé à zéro et les courants Id et Iq résultants sont donc des signaux alternatifs déphasés de +/- 90°.

Le dispositif d'estimation de la vitesse comporte ensuite des moyens de détermination 10, qui ont pour fonction de fournir des tensions alternatives de référence Va et Vb qui seront appliquées au moteur M,M'. Ces tensions alternatives de référence Va et Vb sont calculées dans un repère diphasé orthogonal a,b fixe. Les moyens de détermination 10 comprennent un module régulateur de courant 11. Le module régulateur de courant 11 (ou module IDC : Injection of Direct Current) reçoit en entrée les courants mesurés de flux Id et de couple Iq issus des moyens de mesure 17. Le module régulateur de courant 11 reçoit également en entrée une référence de courant nulle selon les deux composantes du repère d,q, c'est-à-dire un courant de référence Idref nul et un courant de référence Iqref nul. En sortie, le module régulateur de courant 11 génère des signaux de référence Vdref et Vqref dans le repère d,q.

Pour estimer la vitesse du moteur, le variateur de vitesse effectue donc une injection et une régulation de courant nul en phase de roue libre de façon à estimer rapidement et simplement la vitesse du moteur de façon logicielle sans perturber le fonctionnement du moteur, avant de faire une reprise à la volée de la commande du moteur.

Dans le cas du moteur synchrone M, le moteur M présente une f.e.m. (force électro motrice) permanente et proportionnelle à la vitesse. Si l'injection de courant nul se fait à angle fixe, alors il y aura freinage du moteur en roue libre. C'est pourquoi, les courants de référence Idref et Iqref sont nuls dans le repère d,q qui tourne à la vitesse de synchronisme du moteur. Comme le repère d,q tourne, les signaux Vdref et Vqref sont donc des signaux continus dans ce repère. Les moyens de détermination 10 comportent alors un module transformateur 12 pour transformer les signaux Vdref et Vqref dans le repère tournant d,q en tensions alternatives de référence Va et Vb dans le repère fixe a,b. Le module transformateur 12 reçoit également l'information de la valeur de l'angle estimé $\theta_E$ de rotation du moteur pour faire cette transformation.

Dans le cas du moteur asynchrone M', comme le repère d,q ne tourne pas, les courants référence Idref et Iqref sont nuls dans ce repère fixe d,q et les signaux Vdref et Vqref sont donc des signaux alternatifs. Le module transformateur 12 reçoit alors une valeur d'angle de rotation nulle et les signaux alternatifs Vdref et Vqref issus du module régulateur 11 sont donc directement les tensions alternatives de référence Va et Vb à appliquer au moteur.

Les tensions alternatives de référence Va et Vb délivrées en sortie par les moyens de détermination 10 sont donc des signaux sinusoïdaux dont la moyenne est nulle, qui sont déphasés de +/- 90° l'un par rapport à l'autre. Le déphasage relatif entre les tensions Va et Vb est l'image du sens de rotation du moteur et la fréquence des tensions Va et Vb est l'image de la vitesse du moteur. Elles seront ensuite converties de façon classique en une tension triphasée $V_{123}$ dans un repère triphasé par un module convertisseur 15, cette tension $V_{123}$ étant ensuite appliquée sur les différentes phases du moteur par les composants semi-conducteurs de puissance du module onduleur du variateur.

Le dispositif d'estimation de la vitesse comporte ensuite des moyens de calcul 13 de la vitesse de rotation $\omega$ du moteur. Selon l'invention, ces moyens de calcul 13 sont implantés dans l'unité de contrôle du variateur et ne reçoivent en entrée que les tensions alternatives de référence Va et Vb sans avoir besoin d'utiliser d'autres informations telles que des paramètres liés aux caractéristiques du moteur. Les moyens de calcul utilisent le fait que les tensions de référence Va et Vb sont des tensions alternatives pour évaluer l'angle $\theta$ de rotation du vecteur tension $V_{123}$ dont les composantes sont lesdites tensions Va,Vb.

Selon l'invention qui est détaillée en figure 3, les moyens de calcul 13 utilisent un circuit PLL (Phase Locked Loop). Lorsqu'elle est faible, l'erreur entre la valeur estimée $\theta_E$ de l'angle de rotation du moteur et la valeur $\theta$ de l'angle du vecteur tension $V_{123}$ peut s'écrire de la façon suivante :

$$\sin (\theta - \theta_E) = (Va^*\cos\theta_E - Vb^*\sin\theta_E) / V_{MOD}$$

dans laquelle $V_{MOD}$ représente le module de $V_{123}$ ($V_{MOD}$ = SQR($Va^2$+$Vb^2$)), $V_{123}$ étant le vecteur de la tension triphasée appliquée au moteur et dont les composantes dans le repère fixe a,b sont respectivement Va et Vb, comme indiqué en figure 4. Le rôle du circuit PLL est alors de réduire l'erreur entre la valeur $\theta_E$ et la valeur $\theta$. Lorsque cette erreur tend vers zéro, alors la valeur $\theta_E$ obtenue correspond à la valeur estimée de l'angle de rotation du moteur.

Pour cela, le circuit PLL calcule ($\theta$ - $\theta_E$) puis l'amplifie à l'aide d'un régulateur PI (Proportionnel Intégral). La sortie de ce régulateur PI est ensuite filtrée pour fournir en sortie la vitesse de rotation estimée $\omega$, et est par ailleurs réintroduite dans un bloc intégrateur (noté 1/s) pour fournir en sortie l'angle de rotation estimé $\theta_E$. L'angle de rotation $\theta_E$ est également renvoyé aux moyens de mesure 17 et au module transformateur 12 dans le cas d'un dispositif adapté pour un moteur synchrone M.

Ainsi, quelle que soit la valeur de la vitesse du moteur, l'invention permet une estimation rapide de la vitesse de rotation du moteur avec un délai sensiblement constant et déterminé principalement par le filtrage du signal $\omega$ (de l'ordre de quelques dixièmes de secondes).

Selon un autre mode de réalisation connu dans l'état de la technique, les moyens de calcul 13 peuvent également déterminer directement la valeur estimée $\theta_E$ de l'angle de rotation du moteur en utilisant la formule suivante :

$$\theta_E = \text{arctg}\left(\frac{Vb}{Va}\right)$$

La vitesse de rotation estimée ω est ensuite obtenue par dérivation de la valeur calculée de $\theta_E$. Toutefois, ce mode de réalisation est moins robuste car il pourrait être plus sujet aux bruits des signaux, notamment pour Vdref, Vqref et Va, Vb.

Le procédé et le dispositif d'estimation de la vitesse de rotation ω du moteur en roue libre selon l'invention sont définis par les revendications 1 et 5.

Dans le cas d'un moteur asynchrone M', il est préférable d'attendre que le moteur soit défluxé avant de démarrer ce procédé d'estimation de la vitesse, afin de ne pas perturber le moteur pendant l'injection de courant nul. C'est pourquoi, le procédé peut comporter une étape d'attente de défluxage du moteur, effectuée au préalable de l'étape de mesure. En phase de roue libre, le flux dans un moteur asynchrone décroît exponentiellement suivant la constante rotorique du moteur (de l'ordre d'environ 100msec pour un moteur de 4kW). Dans le mode de réalisation présenté, cette étape d'attente est effectuée simplement par le déroulement d'une simple temporisation de valeur prédéterminée entre la décision d'effectuer une estimation de la vitesse de rotation du moteur et le démarrage effectif de l'étape de mesure.

La valeur de la temporisation peut soit être fixe et suffisante pour s'assurer du bon défluxage de tous les types de moteurs asynchrones, soit préférentiellement tenir compte du niveau de flux initial et de la constante rotorique du moteur pour optimiser le temps d'attente en fonction de la puissance moteur.

## Revendications

**1.** Procédé d'estimation de la vitesse de rotation (ω) d'un moteur électrique (M,M') en roue libre, le procédé étant exécuté dans un variateur de vitesse destiné à commander le moteur en générant des tensions alternatives de référence (Va,Vb), le procédé comportant :

- Une étape de mesure d'un courant de flux (Id) et d'un courant de couple (Iq) du moteur dans un repère diphasé orthogonal (d,q),
- Une étape de détermination desdites tensions alternatives de référence (Va,Vb), en exécutant une régulation de courant à partir des courants mesurés de flux (Id) et de couple (Iq), et à partir d'un courant de référence (Idref) nul et d'un courant référence (Iqref) nul dans ledit repère (d,q), le procédé étant **caractérisé par**:
- Une étape de calcul dans laquelle la vitesse de rotation (ω) est calculée en évaluant l'angle de rotation du vecteur tension dont les composantes sont lesdites tensions alternatives de référence (Va,Vb) dans un repère diphasé orthogonal fixe (a,b), l'étape de calcul utilisant un circuit de boucle à verrouillage de phase (PLL) qui reçoit en entrée les tensions alternatives de référence (Va,Vb) et qui délivre en sortie la vitesse de rotation (ω).

**2.** Procédé d'estimation de la vitesse selon la revendication 1, **caractérisé en ce que** le procédé comporte une étape d'attente de défluxage du moteur effectuée au préalable de l'étape de mesure.

**3.** Procédé d'estimation de la vitesse selon la revendication 2, **caractérisé en ce que** l'étape d'attente consiste en une temporisation d'une valeur prédéterminée dépendant d'un niveau de flux initial et d'une constante rotorique du moteur (M').

**4.** Procédé d'estimation de la vitesse selon la revendication 1, **caractérisé en ce que** le procédé est mis en oeuvre lors d'une reprise à la volée de la commande du moteur (M,M').

**5.** Dispositif d'estimation de la vitesse de rotation (ω) d'un moteur électrique (M,M') en roue libre, le dispositif étant intégré dans un variateur de vitesse destiné à commander le moteur au moyen de tensions alternatives de référence (Va,Vb), le dispositif comportant:

- Des moyens de mesure (17) d'un courant mesuré de flux (Id) et un courant mesuré de couple (Iq) du moteur dans un repère diphasé orthogonal (d,q),
- Des moyens de détermination (10) qui délivrent en sortie lesdites tensions alternatives de référence (Va,Vb), à partir des courants mesurés de flux (Id) et de couple (Iq), et à partir d'un courant de référence (Idref) nul et d'un courant de référence (Iqref) nul dans ledit repère (d,q), les moyens de détermination (10) comprenant un module régulateur de courant (11), le dispositif étant **caractérisé par**:

- Des moyens de calcul (13) qui calculent la vitesse de rotation ($\omega$) en évaluant l'angle de rotation du vecteur tension dont les composantes sont lesdites tensions alternatives de référence (Va,Vb) dans un repère diphasé orthogonal fixe (a,b), les moyens de calcul (13) comprenant un module circuit de boucle à verrouillage de phase (PLL) recevant en entrée les tensions alternatives de référence (Va,Vb) et délivrant en sortie la vitesse de rotation ($\omega$).

6. Dispositif d'estimation de la vitesse selon la revendication 5, **caractérisé en ce que** les moyens de mesure (17) fournissent les courants mesurés de flux (Id) et de couple (Iq) dans le repère (d,q) tournant à une vitesse de synchronisme du moteur (M).

7. Dispositif d'estimation de la vitesse selon la revendication 6, **caractérisé en ce que** le module régulateur de courant (11) délivre en sortie des signaux continus (Vdref,Vqref) par rapport audit repère tournant (d,q) et les moyens de détermination (10) comprennent un module transformateur (12) transformant lesdits signaux continus en lesdites tensions alternatives de référence (Va,Vb).

8. Dispositif d'estimation de la vitesse selon la revendication 5, **caractérisé en ce que** les moyens de mesure (17) fournissent les courants mesurés de flux (Id) et de couple (Iq) dans le repère (d,q) fixe.

9. Dispositif d'estimation de la vitesse selon la revendication 5, **caractérisé en ce que** le dispositif est utilisé lors d'une reprise à la volée de la commande du moteur (M,M').

10. Variateur de vitesse destiné à la commande d'un moteur électrique (M,M'), **caractérisé en ce qu'**il comporte un dispositif d'estimation de la vitesse de rotation du moteur selon l'une des revendications 5 à 9.

**Claims**

1. Method for estimating the rotational speed ($\omega$) of an electric motor (M, M') when it is freewheeling, the method being carried out in a variable speed drive for controlling the motor by generating reference alternating voltages (Va, Vb), the method including:

   - a step for measuring a flux current (Id) and a torque current (Iq) of the motor in an orthogonal two-phase base (d,q),
   - a step for determining said reference alternating voltages (Va, Vb), by carrying out a current regulation on the basis of said measured flux and torque currents (Id and Iq), and on the basis of a zero reference current (Idref) and a zero reference current (Iqref) in said base (d,q),
   the method being **characterised by**:
   - a calculation step wherein the rotational speed ($\omega$) is calculated by evaluating the angle of rotation of the voltage vector, the components of which are said reference alternating voltages (Va, Vb) in a fixed orthogonal two-phase base (a,b), the calculation step using a Phase Locked Loop (PLL) circuit which is inputted with the reference alternating voltages (Va, Vb) and which outputs the rotational speed $\omega$.

2. Speed estimation method according to Claim 1, **characterised in that** the method comprises a step for awaiting defluxing of the motor, which is carried out prior to the measuring step.

3. Speed estimation method according to Claim 2, **characterised in that** the waiting step consists in a delay time of a predetermined value depending on the initial flux level and the rotor constant of the motor (M') .

4. Speed estimation method according to Claim 1, **characterised in that** the method is implemented during the process for retaking control of the motor (M, M') on the fly.

5. Device for estimating the rotational speed ($\omega$) of an electric motor (M, M') when it is freewheeling, the device being integrated into a variable speed drive for controlling the motor by means of reference alternating voltages (Va, Vb), the device including:

   - means (17) for measuring a measured flux current (Id) and a measured torque current (Iq) of the motor in an orthogonal two-phase base (d,q),
   - determining means (10) which output said reference alternating voltages (Va, Vb), on the basis of said measured flux and torque currents (Id and Iq), and on the basis of a zero reference current (Idref) and a zero reference current (Iqref) in said base (d,q), the determining means (10) including a current regulating module (11), the device being **characterised in that** :
- calculating means (13) which calculate the rotational speed (ω) by evaluating the angle of rotation of the voltage vector, the components of which are said reference alternating voltages (Va, Vb) in a fixed orthogonal two-phase base (a,b), the calculating means (13) including a Phase Locked Loop (PLL) circuit module being input with the reference alternating voltages (Va, Vb) and outputting the rotational speed (ω).

6.  Speed estimation device according to Claim 5, **characterised in that** the measuring means (17) provide the measured flux and torque currents (Id and Iq) in the base (d,q) which turns at a synchronous speed of the motor (M).

7.  Speed estimation device according to Claim 6, **characterised in that** the current regulating module (11) outputs continuous signals (Vdref, Vqref) in relation to said turning base (d,q) and the determining means (10) include a transformer module (12) transforming said continuous signals into said reference alternating voltages (Va, Vb).

8.  Speed estimation device according to Claim 5, **characterised in that** the measuring means (17) provide the measured flux and torque currents (Id and Iq) in the fixed base (d,q).

9.  Speed estimation device according to Claim 5, **characterised in that** the device is used during the process for retaking control of the motor (M,M') on the fly.

10. Variable speed drive for controlling an electric motor (M,M'), **characterised in that** it includes a device for estimating the rotational speed of the motor according to one of Claims 5 to 9.

**Patentansprüche**

1.  Verfahren zur Schätzung der Drehgeschwindigkeit (ω) eines Elektromotors (M, M') im Freilauf, wobei das Verfahren in einem Umrichter ausgeführt wird, der dazu bestimmt ist, den Motor zu steuern, indem er Bezugswechselspannungen (Va, Vb) erzeugt, wobei das Verfahren aufweist:

    - einen Schritt der Messung eines Flussstroms (Id) und eines Drehmomentstroms (Iq) des Motors in einem orthogonalen zweiphasigen Achsenkreuz (d, q),
    - einen Schritt der Bestimmung der Bezugswechselspannungen (Va, Vb), indem eine Stromregelung ausgehend von den gemessenen Fluss- (Id) und Drehmomentströmen (Iq) und ausgehend von einem Bezugsstrom (Idref} Null und einem Bezugsstrom (Iqref) Null in dem Achsenkreuz (d, q) durchgeführt wird,

    wobei das Verfahren **gekennzeichnet ist durch**:

    - einen Rechenschritt, in dem die Drehgeschwindigkeit (ω) berechnet wird, indem der Drehwinkel des Spannungsvektors bewertet wird, dessen Komponenten die Bezugswechselspannungen (Va, Vb) in einem ortsfesten orthogonalen zweiphasigen Achsenkreuz (a, b) sind, wobei der Rechenschritt eine Schleifenschaltung mit Phasenverriegelung (PLL) verwendet, die am Eingang die Bezugswechselspannungen (Va, Vb) empfängt und am Ausgang die Drehgeschwindigkeit (ω) liefert.

2.  Verfahren zur Schätzung der Geschwindigkeit nach Anspruch 1, **dadurch gekennzeichnet, dass** das Verfahren einen Schritt des Wartens auf eine Feldschwächung des Motors aufweist, der vor dem Messschritt durchgeführt wird.

3.  Verfahren zur Schätzung der Geschwindigkeit nach Anspruch 2, **dadurch gekennzeichnet, dass** der Warteschritt aus eine Verzögerung um einen vorbestimmten Wert besteht, der von einem Anfangsflusspegel und von einer Rotorkonstante des Motors (M') abhängt.

4.  Verfahren zur Schätzung der Geschwindigkeit nach Anspruch 1, **dadurch gekennzeichnet, dass** das Verfahren bei einer Fangfunktion der Steuerung des Motors (M, M') angewendet wird.

5.  Vorrichtung zur Schätzung der Drehgeschwindigkeit (ω) eines Elektromotors (M, M') im Freilauf, wobei die Vorrichtung in einen Umrichter integriert ist, der dazu bestimmt ist, den Motor mittels Bezugswechselspannungen (Va, Vb) zu steuern, wobei die Vorrichtung aufweist:

- Messeinrichtungen (17) eines gemessenen Flussstroms (Id) und eines gemessenen Drehmomentstroms (Iq) des Motors in einem orthogonalen zweiphasigen Achsenkreuz (d, q),
- Bestimmungseinrichtungen (10), die am Ausgang die Bezugswechselspannungen (Va, Vb) ausgehend von den gemessenen Fluss- (Id) und Drehmomentströmen (Iq) und ausgehend von einem Bezugsstrom (Idref) Null und einem Bezugsstrom (Iqref) Null im Achsenkreuz (d, q) liefern, wobei die Bestimmungseinrichtungen (10) ein Stromreglermodul (11) enthalten,

wobei die Vorrichtung **gekennzeichnet ist durch**:

- Recheneinrichtungen (13), die die Drehgeschwindigkeit (ω) berechnen, indem sie den Drehwinkel des Spannungsvektors bewerten, dessen Komponenten die Bezugswechselspannungen (Va, Vb) in einem ortsfesten orthogonalen zweiphasigen Achsenkreuz (a, b) sind, wobei die Recheneinrichtungen (13) ein Modul einer Schleifenschaltung mit Phasenverriegelung (PLL) enthalten, das am Eingang die Bezugswechselspannungen (Va, Vb) empfängt und am Ausgang die Drehgeschwindigkeit (ω) liefert.

6. Vorrichtung zur Schätzung der Geschwindigkeit nach Anspruch 5, **dadurch gekennzeichnet, dass** die Messeinrichtungen (17) die gemessenen Fluss- (Id) und Drehmomentströme (Iq) im mit einer Synchrongeschwindigkeit des Motors (M) drehenden Achsenkreuz (d, q) liefern.

7. Vorrichtung zur Schätzung der Geschwindigkeit nach Anspruch 6, **dadurch gekennzeichnet, dass** das Stromreglermodul (11) am Ausgang kontinuierliche Signale (Vdref, Vqref) bezüglich des drehenden Achsenkreuzes (d, q) liefert, und die Bestimmungseinrichtungen (10) ein Wandlermodul (12) enthalten, das die kontinuierlichen Signale in die Bezugswechselspannungen (Va, Vb) umwandelt.

8. Vorrichtung zur Schätzung der Geschwindigkeit nach Anspruch 5, **dadurch gekennzeichnet, dass** die Messeinrichtungen (17) die gemessenen Fluss- (Id) und Drehmomentströme (Iq) im ortsfesten Achsenkreuz (d, q) liefern.

9. Vorrichtung zur Schätzung der Geschwindigkeit nach Anspruch 5, **dadurch gekennzeichnet, dass** die Vorrichtung bei einer Fangfunktion der Steuerung des Motors (M, M') verwendet wird.

10. Umrichter zur Steuerung eines Elektromotors (M, M'), **dadurch gekennzeichnet, dass** er eine Schätzvorrichtung der Drehgeschwindigkeit des Motors nach einem der Ansprüche 5 bis 9 aufweist.

FIG. 1

FIG. 2

FIG. 4

FIG. 3

EP 1 876 698 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004040837 B
- EP 1221765 A